(19) **Europäisches Patentamt**
**European Patent Office**
**Office européen des brevets**

(11) **EP 1 642 116 B1**

(12) **EUROPÄISCHE PATENTSCHRIFT**

(45) Veröffentlichungstag und Bekanntmachung des Hinweises auf die Patenterteilung:
**17.11.2010 Patentblatt 2010/46**

(51) Int Cl.:
***G01N 25/72*** *(2006.01)*

(21) Anmeldenummer: **04762349.1**

(22) Anmeldetag: **06.07.2004**

(86) Internationale Anmeldenummer:
**PCT/DE2004/001445**

(87) Internationale Veröffentlichungsnummer:
**WO 2005/005972 (20.01.2005 Gazette 2005/03)**

(54) **VERFAHREN ZUR CHARAKTERISIERUNG VON WERKSTÜCKEN AUS ELEKTRISCH LEITFÄHIGEN MATERIALIEN**

METHOD FOR CHARACTERISING WORKPIECES CONSISTING OF ELECTRICALLY CONDUCTIVE MATERIALS

PROCEDE DE CARACTERISATION DE PIECES CONSTITUEES DE MATERIAUX ELECTROCONDUCTEURS

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.07.2003 DE 10331070**

(43) Veröffentlichungstag der Anmeldung:
**05.04.2006 Patentblatt 2006/14**

(73) Patentinhaber: **Fraunhofer-Gesellschaft zur Förderung der angewandten Forschung e.V.
80686 München (DE)**

(72) Erfinder: **WALLE, Günter
66399 Mandelbachtal (DE)**

(74) Vertreter: **Gagel, Roland
Patentanwalt Dr. Roland Gagel
Landsberger Strasse 480a
81241 München (DE)**

(56) Entgegenhaltungen:
**EP-A- 0 378 006     EP-A- 0 629 852
US-A- 4 109 508     US-A- 5 562 345**

- **WALLE G ET AL: "ZERSTOERUNGSFREIE PRUEFUNG MITTELS THERMOGRAPHISCHER VERFAHREN NON-DESTRUCTIVE TESTING WITH THERMOGRAPHIC TECHNIQUES" TECHNISCHES MESSEN TM, R.OLDENBOURG VERLAG. MUNCHEN, DE, Bd. 66, Nr. 9, September 1999 (1999-09), Seiten 312-321, XP000923890 ISSN: 0171-8096**

**Beschreibung**

**Technisches Anwendungsgebiet**

Die vorliegende Erfindung betrifft ein Verfahren zur Charakterisierung von Werkstücken aus einem elektrisch leitfähigen Material oder aus einem Materialverbund mit einer Schicht oder einem Substrat aus dem elektrisch leitfähigen Material, bei denen ein elektrisch leitfähiger Bereich des Werkstücks durch flächige Einkopplung eines elektromagnetischen Impulses induktiv erwärmt und eine aus der induktiven Erwärmung resultierende örtliche Temperaturverteilung an einer Oberfläche des Werkstücks während der Einkopplung und/oder in zeitlichem Abstand zum Beginn der Einkopplung des elektromagnetischen Impulses erfasst wird.

Das vorliegende Verfahren betrifft dabei insbesondere das Anwendungsgebiet der zerstörungsfreien Prüfung von Werkstücken, um bspw. Lunker, Delaminationen oder Fremdmaterialeinschlüsse in den Werkstücken erkennen zu können. Neben der Prüfung von Werkstücken, die ausschließlich aus einem elektrisch leitfähigen Material bestehen, können auch Verbundmaterialien, wie bspw. Klebeverbindungen von metallischen Bauteilen mit nichtmetallischen Komponenten, bspw. im Hinblick auf Klebefehler wie Delaminationen oder Ablösungen, mit dem vorliegenden Verfahren untersucht werden. Weiterhin lassen sich die dem Verfahren unterzogenen Werkstücke auch dahingehend charakterisieren, welche Schichtdicken nichtmetallische Schichten auf einem metallischen Substrat oder einer metallischen Schicht aufweisen.

Für die zerstörungsfreie Charakterisierung von Werkstücken im Hinblick auf Fehlstellen oder Schichtdicken sind unterschiedliche Techniken bekannt. Ein Beispiel stellt die optische Anregung mit Licht dar, mit dem ein Bereich des Werkstückes erwärmt und aus einer aus der Erwärmung resultierenden Temperaturverteilung an der Oberfläche des Werkstücks Rückschlüsse auf Fehlstellen im Werkstück gezogen werden können. Diese thermische Technik durch optische Anregung hat jedoch den Nachteil, dass gerade bei metallischen Materialien das Absorptionsvermögen für Licht relativ gering ist, so dass nur wenig Wärmeenergie durch Lichtabsorption in das Werkstück eingebracht werden kann. Dies führt zu einem sehr geringen Nachweisvermögen für Fehlstellen, das proportional zur ins Material eingebrachten Wärmeenergie steigt. Ein weiterer Nachteil der optischen Anregungstechniken besteht darin, dass die Wärmeenergie in der Regel nur im oberflächennahen Bereich des Prüfobjektes erzeugt wird, so dass Fehlstellen in größerer Tiefenlage unter der Oberfläche nur sehr schwer nachgewiesen werden können.

Aus der DE 199 33 446 C1 ist ein Verfahren zum Nachweis von Fehlern in metallischen Bauteilen bekannt, das ebenfalls eine Charakterisierung der Bauteile mit einer thermischen Prüftechnik offenbart. Bei diesem Verfahren wird die Technik der induktiven Anregung eingesetzt, bei der das Werkstück durch flächige Einkopplung eines elektromagnetischen Impulses induktiv erwärmt und eine aus der induktiven Erwärmung resultierende örtliche Temperaturverteilung an einer Oberfläche des Werkstücks in zeitlichem Abstand zur Einkopplung des elektromagnetischen Impulses erfasst wird. Der zu überprüfende Bereich des Werkstücks wird dabei in eine Spule eingeführt, über die der elektromagnetische Impuls in die Oberfläche des Werkstücks eingekoppelt wird und dort Wirbelströme induziert, die diesen Bereich aufwärmen. Als Anregungsfrequenz werden hierbei Frequenzen von 50 kHz - 200 kHz eingesetzt, mit denen aufgrund der geringen Eindringtiefe lediglich der Bereich unmittelbar an oder unter der Oberfläche auf Fehlstellen, insbesondere auf zur Oberfläche hin geöffnete Risse, untersucht werden kann.

Die bisher beschriebenen Verfahren eignen sich schlecht für die Erfassung von tiefer liegenden verdeckten Fehlstellen in elektrisch leitfähigen Materialien sowie zur Charakterisierung von elektrisch nicht leitenden Schichten auf elektrisch leitfähigen Substraten.

Die US 5 562 345 A beschreibt ein Verfahren zur quantitativen Erfassung von Fehlstellen in laminierten oder Komposit-Strukturen, bei dem ein Oberflächenbereich eines Testobjekts durch magnetische Induktion oder Wirbelstromerzeugung bis in eine gewünschte Tiefe erwärmt und über einen Temperatursensor Temperaturänderungen in dem erwärmten Bereich über der Zeit erfasst werden. Durch computergestützten Vergleich der erfassten Temperaturänderungen mit Kalibrationsstandards eines ähnlichen Objekts mit bekannten Fehlstellen kann dann das Testobjekt analysiert werden.

Die Aufgabe der vorliegenden Erfindung besteht darin, ein Verfahren zur Charakterisierung von Werkstücken aus einem elektrisch leitfähigen Material oder aus einem Materialverbund mit einer elektrisch leitfähigen Schicht oder einem elektrisch leitfähigen Substrat anzugeben, mit dem auch tiefer liegende Fehlstellen mit hoher Genauigkeit erfasst werden können. Das Verfahren soll sich auch zur Bestimmung der Schichtdicke nicht leitender Materialschichten auf einem elektrisch leitfähigen Substrat oder einer elektrisch leitfähigen Schicht eines Materialverbundes eignen.

**Wege zur Ausführung der Erfindung**

Die Aufgabe wird mit dem Verfahren gemäß den Patentansprüchen 1 bis 3 gelöst. Vorteilhafte Ausgestaltungen des Verfahrens sind Gegenstand der Unteransprüche oder lassen sich aus der nachfolgenden Beschreibung sowie den Ausführungsbeispielen entnehmen.

Beim vorliegenden Verfahren zur Charakterisierung von Werkstücken wird in allen drei Ausführungsvarianten ein elektrisch leitfähiger Bereich des Werkstücks durch flächige Einkopplung eines elektromagnetischen Impulses induktiv erwärmt und eine aus der induktiven Erwärmung resultierende örtliche Temperaturverteilung an einer Oberfläche des Werkstücks während der Einkopplung und/oder in zeitlichem Abstand zum Beginn der Einkopplung des elektromagnetischen Impulses erfasst. Die induktive Erwärmung wird dabei mit einer Anregungsfrequenz von $\leq 20$ kHz durchgeführt, die so gewählt ist, dass die Eindringtiefe des elektromagnetischen Impulses in den elektrisch leitfähigen Bereich größer als eine Tiefe von zu erfassenden verdeckten Fehlstellen im elektrisch leitfähigen Bereich und/oder größer als eine Dicke der elektrisch leitfähigen Schicht bzw. des elektrisch leitfähigen Substrates ist, und die Temperaturverteilung zeitaufgelöst erfasst.

In einer Ausführungsvariante wird zu einer Zeit $t_a \approx z^2 / \alpha$ nach Beginn der induktiven Erwärmung die Temperaturverteilung an der Oberfläche des elektrisch leitfähigen Materials zum Nachweis von Fehlstellen im Werkstück erfasst, wobei z der Tiefe der zu erfassenden Fehlstellen und $\alpha$ der Wärme-Diffusivität des leitfähigen Materials entsprechen, oder zur Detektion von Fehlstellen in einer elektrisch nicht leitfähigen Schicht auf dem Substrat aus dem elektrisch leitfähigen Material oder von Fehlstellen im elektrisch leitfähigen Substrat die örtliche Temperaturverteilung an der Oberfläche der elektrisch nicht leitfähigen Schicht zu einer Zeit $t_m \approx (D^2 / \alpha)$ nach Beginn der induktiven Erwärmung ausgewertet, wobei D der Dicke der elektrisch nicht leitfähigen Schicht und $\alpha$ der Wärme-Diffusivität der elektrisch nicht leitfähigen Schicht entsprechen.

In einer zweiten Ausführungsvariante werden aus charakteristischen Messgrößen eines zeitlichen Temperaturverlaufs an der Oberfläche eine Dicke einer auf der Schicht oder dem Substrat aus dem elektrisch leitfähigen Material aufgebrachten elektrisch nicht leitfähigen Schicht des Materialverbundes bestimmt und zur Bestimmung der Dicke der elektrisch nicht leitfähigen Schicht auf dem Substrat aus dem elektrisch leitfähigen Material die Temperatur an der Oberfläche der elektrisch nicht leitfähigen Schicht zu einer Zeit $t_m \approx (D^2 / \alpha)$ nach Beginn der induktiven Erwärmung ausgewertet, wobei D der zu erwartenden Schichtdicke und $\alpha$ der Wärme-Diffusivität des Materials entsprechen.

In einer dritten Ausführungsvariante wird aus der Temperatur zu einer bestimmten Zeit $t > \approx W^2 / \alpha$ nach Beginn der Einkopplung des elektromagnetischen Impulses eine Wandstärke des elektrisch leitfähigen Materials bestimmt, wobei W einer geschätzten Wandstärke und $\alpha$ der Wärme-Diffusivität des Materials entsprechen.

Bei dem vorgeschlagenen Verfahren wird mittels eines Frequenzgenerators über einen entsprechenden Induktor, insbesondere eine Aufsatzspule, in bestimmten Fällen auch eine das Prüfobjekt umfassende Spule, das zu untersuchende Werkstück induktiv, impulsartig relativ großflächig angeregt, vorzugsweise über zumindest die Hälfte seiner Breite. Der angeregte elektrisch leitfähige Bereich des Werkstücks, in den die elektromagnetischen Impulse eingekoppelt werden, wird aufgrund von Wirbelstromverlusten aufgeheizt, die durch die mit dem elektromagnetischen Impuls induzierten Wirbelströme bedingt sind. Durch die vorliegende Wahl der Anregungsfrequenz werden insbesondere Fehlstellen im Werkstück erfasst, die deutlich von der Werkstückoberfläche entfernt liegen, bspw. in einem Bereich von $\geq 0,5$ mm Tiefe. Durch geeignete Einstellung der Anregungsfrequenz können unterschiedliche Tiefenbereiche erfasst werden.

Für die Charakterisierung der Werkstücke können bei dem vorliegenden Verfahren zwei unterschiedliche physikalische Phänomene ausgenutzt werden. Beim Nachweis von voluminösen Fehlstellen, wie bspw. Lunker oder Fremdmaterialeinschlüsse, von Rissen unter der Oberfläche sowie von schräg zur Oberfläche liegenden Rissen in Metallbauteilen wird in erster Linie der sog. Wirbelstromeffekt ausgenutzt. Bei diesem Effekt bewirkt eine erhöhte Wirbelstromdichte in der Umgebung eines Fehlers eine verstärkte Aufheizung, die anschließend an der Oberfläche des Werkstücks lokal erkannt werden kann. Die Eindringtiefe der Wirbelströme, d. h. die Eindringtiefe des elektromagnetischen Impulses, sollte dabei so gewählt werden, dass sie zumindest der Tiefenlage der nachzuweisenden Fehler entspricht. Durch Variation der Frequenz und damit der Eindringtiefe besteht hierbei die Möglichkeit, unterschiedliche Tiefenbereiche des elektrisch leitfähigen Materials gezielt im Hinblick auf Fehlstellen zu untersuchen. Damit bietet diese Technik grundsätzlich auch die Möglichkeit, die Tiefenlage von Fehlstellen zu ermitteln.

Zur Nutzung des Wirbelstromeffektes ist es bei rissartigen Fehlern außerdem von Vorteil, die Spule zur Einkopplung des elektromagnetischen Impulses so zu gestalten bzw. zu orientieren, dass die Spulenströme senkrecht zu einem Riss verlaufen, d.h. dass die magnetischen Feldlinien der Spule parallel zum Riss orientiert sind. Dies resultiert in der größten Wirbelstromdichte in der Umgebung des Fehlers. Da der Verlauf der Risse in der Regel vorher nicht bekannt ist, wird in dieser Ausgestaltung das Werkstück unter verschiedenen Orientierungen der Spule bzw. mit zumindest zwei Spulen unterschiedlicher Orientierung vermessen, so dass in jedem Fall eine der Orientierungen eine höhere Nachweisempfindlichkeit gegenüber einem derartigen Riss aufweist.

In einer alternativen Ausgestaltung des vorliegenden Verfahrens wird der Wärmeleitungseffekt zum Nachweis von Fehlstellen in elektrisch nicht leitfähigen Schichten auf elektrisch leitfähigen Substraten oder Schichten sowie zur Bestimmung der Dicke derartiger aufgebrachter Schichten ausgenutzt. Diese Technik eignet sich nicht nur zur Schichtdickenbestimmung, sondern auch zum Nachweis von Fehlstellen wie etwa Delaminationen zwischen der Beschichtung und dem metallischen Substrat. Die Anregungsfrequenz wird hierbei so gewählt, dass die Eindringtiefe in den elektrisch leitfähigen Bereich unterhalb der elektrisch nicht leitfähigen Schicht größer oder gleich der Dicke der metallischen Schicht bzw. des metallischen Substrats ist. Die Eindringtiefe δ ist hierbei gegeben durch

$$\delta = 1 / (\sqrt{\pi\, f\, \mu 0\, \mu\, \sigma}),$$

wobei f die Anregungsfrequenz, $\mu 0$ die Vakuumpermeabilität, $\mu$ die relative Permeabilität des metallischen Materials und σ die elektrische Leitfähigkeit sind. Durch diese Wahl der Eindringtiefe wird eine homogene Aufheizung des metallischen Substrates erreicht, von dem aus sich der Wärmestrom durch die elektrisch nicht leitfähige Schicht bis zur Oberfläche des Werkstücks ausbreitet. Bei Vorliegen von Fehlstellen in dieser Schicht wird der Wärmestrom bei der Ausbreitung gestört, so dass diese Störung nach einer gewissen Zeit an der Oberfläche anhand der Temperaturverteilung als lokaler Temperaturkontrast zur Umgebung erkannt werden kann. Da der Wärmestrom nur einmal den Weg von der Fehlstelle zur Oberfläche zurücklegen muss, unterliegt er einer deutlich geringeren Dämpfung als ein Wärmestrom, der vom oberflächennahen Bereich zur Fehlstelle und von dort zurück zur Oberfläche diffundiert. Daher ergibt sich bei dem Einsatz des vorliegenden Verfahrens eine verbesserte Fehlererkennbarkeit als bei anderen bekannten Verfahren.

Durch die zeitaufgelöste Erfassung der örtlichen Temperaturverteilung auf der Oberfläche der elektrisch nicht leitenden Schicht, bei der diese Temperaturverteilung über einen bestimmten Zeitraum entweder kontinuierlich oder schrittweise erfasst wird, kann die Schichtdicke der elektrisch nicht leitenden Schicht gemessen werden. Die Schichtdicke ergibt sich dabei aus der Zeit, in der der Wärmestrom vom darunter liegenden aufgeheizten Substrat bis an die Oberfläche des Werkstücks gelangt. Hierbei wird der zeitliche Verlauf der Temperatur oder beispielsweise auch nur die Temperatur an der Oberfläche zu einer bestimmten Zeit nach Einkopplung des elektromagnetischen Impulses ausgewertet.

Die Nutzung des Wärmestroms aus dem Materialinneren zur Oberfläche lässt sich auch zum Nachweis von Delaminationen in Metallbauteilen einsetzen, bei denen Risse in etwa parallel zur Oberfläche vorliegen. Hierbei sollte die Eindringtiefe der Wirbelströme so gewählt werden, dass sie für Werkstücke mit einer Dicke ≤ 3 mm größer oder gleich der Werkstückdicke ist und für eine Dicke der Werkstücke > 3 mm mindestens der zur erwartenden Tiefenlage der Fehlstellen entspricht.

Auch die Charakterisierung von Kohlefaserverstärkten Kunststoffmaterialien ist im Hinblick auf Faserfehler, ungleichmäßige Faserverteilung und dgl. mit dem vorliegenden Verfahren möglich, da derartige Fasern elektrisch leitfähig sind. In diesem Falle können durch die vorliegend geeignet gewählten niedrigen Anregungsfreguensen tiefer unter der Oberfläche liegende Faserlagen noch mit hoher Genauigkeit untersucht werden.

In einer besonders vorteilhaften Ausgestaltung des vorliegenden Verfahrens wird die induktive Heiztechnik mit einer aktiven Kühltechnik mit Kühlung der Oberfläche durch Konvektion (z.B. Druckluft oder gekühlte Druckluft) kombiniert. Die Kühlung erfolgt hierbei mittels eines Gasstromes, insbesondere eines impulsförmigen Luftstromes, direkt im Anschluss an die impulsförmige Aufheizung durch Anblasen der Oberfläche. Durch die definierte Kühlung wird erreicht, dass sich ein verstärkter Wärmestrom vom Materialinneren zur Oberfläche hin einstellt, der dazu führt, dass sich der direkt oberhalb der Fehlstelle ausbildende negative Temperaturkontrast verstärkt. Dieser negative Temperaturkontrast (Signal) ist dadurch bedingt, dass im Fehlstellenbereich keine Wärme erzeugt wurde und andererseits dadurch, dass der Wärmestrom aus dem Materialinneren unterhalb der Fehlstelle von dieser gestört wird. In der Nachbarschaft dieses negativen Signals ergibt sich hingegen bei Nutzung des Wirbelstromeffektes ein positiver Temperaturkontrast, bedingt durch die verstärkte Wärmeerzeugung in der Umgebung der Fehlstelle in Folge einer erhöhten Wirbelstromdichte. Durch die aktive Kühlung der Oberfläche wird in vielen Fällen eine Verbesserung des Messergebnisses erreicht.

In einer weiteren sehr vorteilhaften Ausgestaltung des vorliegenden Verfahrens werden das Werkstück sowie die Einrichtung zur Einkopplung des elektromagnetischen Impulses während der Messung relativ zueinander bewegt. Dies kann durch Bewegung des Werkstücks unterhalb des Induktors oder auch durch Bewegung des Induktors über das Werkstück erfolgen. Auf diese Weise kann das Werkstück durch Abscannen sehr schnell vermessen werden. Die Messung erfolgt während der Bewegung des Induktors mit einer Geschwindigkeit v relativ zum Prüfobjekt oder umgekehrt. Diese dynamische Messtechnik hat gegenüber einer statischen Messung den Vorteil einer homogeneren lateralen Aufheizung des Prüfobjektes und damit einer besseren Fehlererkennbarkeit bzw. einer genaueren Schichtdickenbestimmung. Durch die dynamische Messung wird eine Störung des Kamerabildfeldes durch den Induktor vermieden und zudem der Einsatz relativ preiswerter Infrarot-Zeilenkamerasysteme ermöglicht. Die dynamische Messtechnik ermöglicht insbesondere die sehr schnelle Prüfung der Werkstücke, wie sie für viele Anwendungen erforderlich ist.

Für die Durchführung des vorliegenden Verfahrens wird ein Frequenzgenerator mit zumindest einer Sendeantenne in Form einer Spule eingesetzt. Die Temperaturverteilung wird mit Hilfe einer Infrarotstrahlungsmesstechnik, bspw. mit einer geeigneten Infrarotkamera aufgezeichnet.

Bei relativ dünnen, ebenen Prüfobjekten (Dicke ≤ 3 mm) ermöglicht die Technik auch eine Prüfanordnung, bei der sich die Spule und das Infrarotmesssystem auf unterschiedlichen Seiten des Prüfobjekts befinden. Dadurch kann jegliche Störung der Messung durch die Spule (im Kamerabild) vermieden werden. Darüber hinaus werden durch die Spule bedingte Reflexionen vermieden.

Das vorliegende Verfahren arbeitet berührungslos und schnell und ist deshalb grundsätzlich für die Online-Prüfung von Bauteilen geeignet. Mit der vorgeschlagenen Prüftechnik können unter der Oberfläche liegende flächige oder voluminöse Fehlstellen in Metallen empfindlich nachgewiesen und charakterisiert werden. Die Technik ermöglicht bei metallischen Materialien im Vergleich zur herkömmlichen optischen Impuls-Thermographie oder Login-Thermographie eine bessere Energieeinbringung, insbesondere in solchen Fällen, in denen eine Schwärzung der Oberfläche zur Erhöhung der Absorption optischer Strahlung nicht möglich ist. Die Technik ermöglicht es, bei metallischen Materialien tiefer unter der Oberfläche liegende Fehlstellen noch zu detektieren. Weiterhin ist die Charakterisierung von Fehlstellen in nichtmetallischen Beschichtungen auf metallischen Substratmaterialien mit einer deutlich besseren Empfindlichkeit als mit herkömmlichen Verfahren möglich. Die Technik erlaubt eine Frequenzoptimierung sowie eine Optimierung der Impulsdauer der induktiven Anregung für eine verbesserte Analyse von Fehlstellen hinsichtlich Tiefenlage und Ausdehnung. Insbesondere ermöglicht das Verfahren neben der Fehlerdetektion auch die Bestimmung von Wandstärken oder Schichtdicken, bspw. von metallischen Bauteilen oder von nichtmetallischen Schichten auf metallischen Substraten, mit höherer Genauigkeit als mit herkömmlichen thermischen Techniken. Die Verfahrensvariante, bei der eine Scantechnik verwendet wird, hat den Vorteil, dass eine homogenere Aufheizung und damit eine weiter verbesserte Fehlernachweisbarkeit möglich ist. Bei vielen Anwendungen ermöglicht diese Variante zudem eine weiter gesteigerte Prüfgeschwindigkeit und/oder eine preisgünstigere Realisierung in der Prüfpraxis. Das vorliegende Verfahren ermöglicht hierbei insbesondere die Prüfung elektrisch leitfähiger Materialien bezüglich Delaminationen, schräg einlaufenden Rissen, Lunkern u. a. Inhomogenitäten unter der Oberfläche. Sie ermöglichen die Charakterisierung von Verbundmaterialien, bspw. auch Klebeverbindungen, aus nichtmetallischen Beschichtungen auf metallischen Substraten im Hinblick auf Fehlstellen im Substrat, der Beschichtung oder im Interface zwischen Substrat und Beschichtung.

Das vorliegende Verfahren sowie die zugehörige Vorrichtung werden nachfolgend anhand von Ausführungsbeispielen in Verbindung mit den Zeichnungen nochmals näher erläutert.

## Kurze Beschreibung der Zeichnungen

Das vorliegende Verfahren sowie die zugehörige Vorrichtung werden nachfolgend anhand von Ausführungsbeispielen in Verbindung mit den Zeichnungen nochmals näher erläutert. Hierbei zeigen:

Fig. 1     ein Beispiel für eine Vorrichtung zur Durchführung des Verfahrens, bei der sich das Prüfobjekt während der Aufheizung nicht bewegt;

Fig. 2     ein weiteres Beispiel für eine Vorrichtung zur Durchführung des Verfahrens, bei der sich das Prüfobjekt während der Messung kontinuierlich an der Messvorrichtung vorbei bewegt;

Fig. 3     Beispiele für die Anwendung des vorliegenden Verfahrens bei unter- schiedlichen Prüfobjekten; und

Fig. 4     ein Beispiel für ein Thermografiebild sowie des zeitlichen Temperaturverlaufs bei unterschiedlichen Beschichtungen zur Veranschaulichung des vorliegenden Verfahrens.

## Wege zur Ausführung der Erfindung

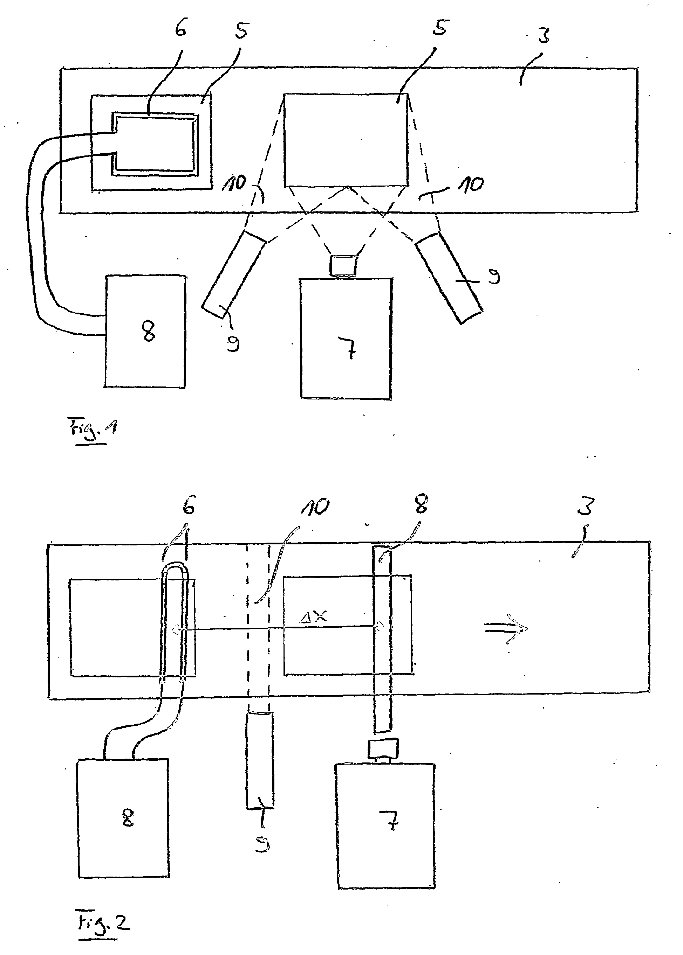

Figur 1 zeigt ein erstes Beispiel für die Bestandteile einer Vorrichtung zur Durchführung des vorliegenden Verfahrens. Bei dem Verfahren wird mittels eines Frequenzgenerators 8 über eine speziell angepasste flächige Aufsatzspule 6 ein elektromagnetischer Impuls erzeugt. Die flächige Aufsatzspule 6 wird in geringem Abstand über dem Prüfobjekt 3 positioniert, so dass der elektromagnetische Impuls flächig in das Werkstück eingekoppelt wird. Durch diese Einkopplung des elektromagnetischen Impulses werden Wirbelströme in einem elektrisch leitfähigen Bereich 5 des Werkstücks 3 induziert, die in Folge von Wirbelstromverlusten zur Aufheizung dieses Bereiches 5 führen. Der aufgeheizte elektrisch leitfähige Bereich 5 ist in der Figur 1 durch das Rechteck schematisch angedeutet. Durch geeignete Wahl der Anregungsfrequenz, d. h. der Zentralfrequenz des anregenden elektromagnetischen Impulses, kann eine unterschiedliche Eindringtiefe der Wirbelströme und somit eine unterschiedliche Tiefe der Aufheizung erreicht werden. Dies ermöglicht die Anpassung der Eindringtiefe und damit der Wirbelstromfelder an die Tiefe von Fehlstellen, die mit dem vorliegenden Verfahren erfasst werden sollen.

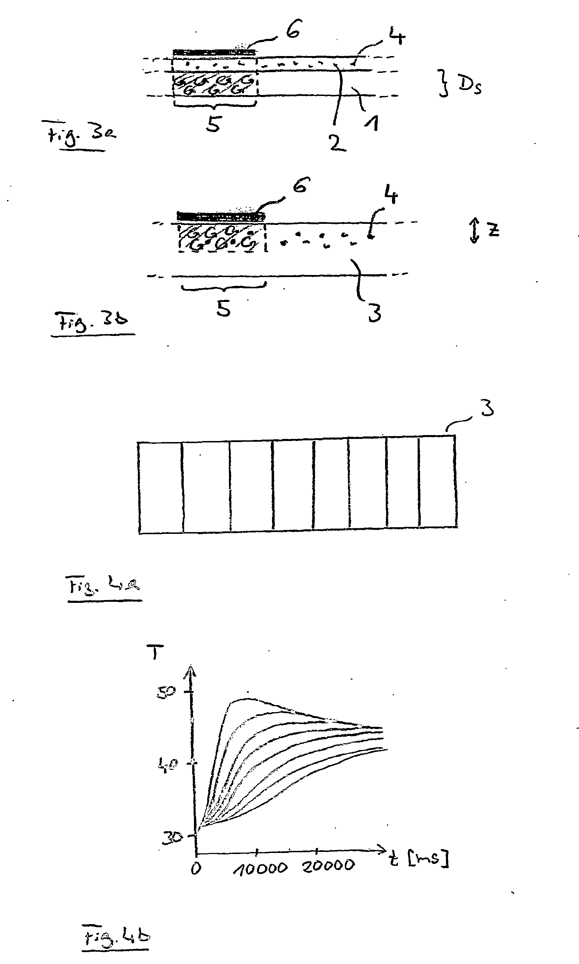

Durch die vorliegende Wahl der Anregungsfrequenz von ≤ 20 kHz wird erreicht, dass die Eindringtiefe des elektromagnetischen Impulses groß genug ist, um nicht nur unmittelbar unter der Oberfläche liegende Fehlstellen erkennen zu können. Weiterhin kann, wie nachfolgend näher erläutert wird, durch die größere Eindringtiefe auch die Schichtdicke einer auf einem elektrisch leitfähigem Substrat oder einer elektrisch leitfähigen Schicht aufgebrachten nicht elektrisch leitfähigen Schicht, beispielsweise einer Polymerbeschichtung, bestimmt werden. Auch Fehlstellen in dieser elektrisch nicht leitenden Schicht lassen sich damit nachweisen. So wird insbesondere zur Schichtdickenbestimmung nicht leitfähiger Schichten auf metallischen Substraten oder zum Nachweis von Fehlstellen wie etwa Delaminationen zwischen Beschichtungen und dem metallischen Substrat eine verbesserte Genauigkeit bzw. eine höhere Fehlernachweisbarkeit erreicht, wenn die Anregungsfrequenz so gewählt wird, dass die Eindringtiefe $\delta$ des elektromagnetischen Impulses zur Erzeugung von Wirbelströmen zumindest der Dicke $D_s$ des metallischen Substratmaterials entspricht. Figur 3a zeigt beispielhaft eine derartige Situation, bei der die anregende Induktionsspule 6 mit einer Frequenz betrieben wird, bei der der erzeugte elektromagnetische Impuls (die Magnetfelder und damit auch die Wirbelstromfelder) das Werkstück 3 bestehend aus dem metallischen Substrat 1 und der darauf aufgebrachten nicht elektrisch leitfähigen Schicht 2 vollständig durchdringt. Die Eindringtiefe $\delta$ ist hierbei gegeben durch $\delta = 1/(\sqrt{\pi f \mu 0 \mu \sigma})$, wobei f der Anregungsfrequenz, $\mu 0$ der Vakuumpermeabilität, $\mu$ der relativen Permeabilität des metallischen Materials und $\sigma$ der elektrischen Leitfähigkeit des metallischen Materials entsprechen. Durch die impulsartige induktive Anregung des metallischen Substrates 1 in dem gerade untersuchten Bereich 5 wird dieser Substratbereich impulsartig induktiv aufgeheizt, wobei sich ein instationärer Wärmestrom einstellt, der sich vom Substrat 1 zur Oberfläche der Beschichtung 2 ausbreitet. Durch die oben angeführte Wahl der Anregungsfrequenz wird eine homogene Aufheizung des metallischen Substrates 1 erreicht, so dass ein gleichmäßiger, intensiver Wärmestrom in das Beschichtungsmaterial 2 hinein erzeugt wird. Dieser Wärmestrom wird von Fehlstellen 4 in der Beschichtung, wie bspw. von Delaminationen, gestört und bewirkt einen lokalen, negativen Temperaturkontrast relativ zur Umgebung während des Aufheizprozesses auf der Oberfläche der Beschichtung 2, anhand dessen die Fehlstelle erkannt werden kann. Diese Technik ermöglicht eine erhöhte Nachweisbarkeit für Fehlstellen aller Art in der Beschichtung 2, da der Wärmestrom nur einmal den Weg von der Fehlstelle 4 zur Oberfläche zurücklegen muss, so dass die Dämpfung wesentlich geringer ist als im Falle einer thermischen Anregung von der Oberfläche her.

Zur Messung der Schichtdicke der nichtmetallischen Schicht 2 wird die gleiche homogene Aufheizung des metallischen Substrates 1 vorgenommen und der Aufheizprozess an der Schichtoberfläche zeitaufgelöst erfasst und ausgewertet. Durch Anwendung eines Algorithmus, der auf dem Vergleich des gemessenen, zeitlichen Temperaturverlaufs mit einem geeignet berechneten Verlauf beruht, ist es möglich, die Schichtdicke zu ermitteln. Das Verfahren ermöglicht hierbei insbesondere bei größeren Schichtdicken ($\geq$ 1mm) eine wesentlich genauere Schichtdickenbestimmung, als dies mit anderen thermischen Techniken durch optische Aufheizung von außen erreichbar ist.

Bei der Prüfung von Werkstücken 3 aus einem metallischen Material zum Nachweis von voluminösen Fehlstellen, wie bspw. Lunkern oder Fremdmaterialeinschlüssen, von Rissen unter der Oberfläche sowie von schräg zur Oberfläche liegenden Rissen wird mit dem vorliegenden Verfahren durch Nutzung des Wirbelstromeffektes ein verbesserter Nachweis gerade von tiefer liegenden, verdeckten Fehlstellen ermöglicht. Die Eindringtiefe der elektromagnetischen Impulse wird hierbei so gewählt, dass sie zumindest der Fehlertiefenlage der zu erfassenden Fehlstellen 4 entspricht (vgl. Fig. 3b). Unter dem Wirbelstromeffekt wird hierbei das Phänomen verstanden, dass sich im Bereich von Fehlstellen des elektrisch leitfähigen Materials keine Wirbelströme ausbilden können und somit keine Erwärmung stattfindet. Andererseits wird die Ausbreitung der Wirbelströme durch die Fehlstellen gestört, was zu einer lokalen Erhöhung der Wirbelstromdichte in der Umgebung der Fehlstellen und somit zu einer verstärkten Wärmeerzeugung in diesem Bereich führt. Durch diesen Mechanismus wird in der Fehlerumgebung aktiv zusätzliche Wärme erzeugt, die zur Oberfläche diffundiert und dort das Fehlersignal, einen Temperaturkontrast relativ zur Umgebung, bewirkt. Durch Variation der Anregungsfrequenz und damit der Eindringtiefe besteht auch die Möglichkeit, unterschiedliche Tiefenbereiche des Materials gezielt im Hinblick auf Fehlstellen zu untersuchen, also eine Art thermische Tomographie durchzuführen, mit der unterschiedlich tiefe Schichten des Materials abgebildet werden. Damit bietet das vorliegende Verfahren grundsätzlich auch die Möglichkeit, die Tiefenlage von Fehlstellen zu ermitteln.

Bei der induktiven Aufheizung des elektrisch leitfähigen Bereiches 5 wird im vorliegenden Beispiel mittels eines Infrarotkamerasystems 7 der Temperaturverlauf an der Werkstückoberfläche mit Beginn der induktiven Anregung zeitaufgelöst über einen geeignet gewählten Zeitraum erfasst und anschließend ausgewertet. Die Erfassung der Temperaturverteilung ist in der Figur 1 zwar neben der Einrichtung 6 zur Einkopplung des elektromagnetischen Impulses angedeutet, findet aber in diesem Beispiel an der gleichen Stelle des Werkstückes 3 statt. Hierbei kann entweder das Werkstück 3 unmittelbar nach der Aufheizung um die entsprechende Distanz unter die Infrarotkamera 7 weiter bewegt werden, oder die Infrarotkamera 7 erfasst diesen Bereich einschließlich der aufliegenden Spule 6. Delaminationen, Lunker oder z.B. auch schräg liegende Risse werden sich je nach ihrer Tiefenlage unter der Oberfläche zu unterschiedlichen Zeiten nach Beginn der impulsförmigen Anregung in einem charakteristischen Temperaturkontrast an der Oberfläche abbilden. Dabei werden die Tiefenlage und die laterale Ausdehnung der Fehlstellen anhand der charakteristischen zeitlichen und örtlichen Temperaturverläufe ausgewertet, die mit der Kamera 7 erfasst werden.

Bei der Nutzung des Wirbelstromeffektes zum Nachweis von Fehlstellen kann durch eine aktive Kühlung der Oberfläche eine weitere Verbesserung des Messergebnisses erzielt werden. Diese zusätzliche Kühlung ist durch die Kühldüsen 9 in der Figur 1 angedeutet, durch die der vermessene Bereich 5 direkt im Anschluss an die impulsförmige Aufheizung ebenfalls impulsförmig mit einem kühlenden Luftstrom beaufschlagt wird. Durch die definierte Kühlung wird erreicht, dass sich ein verstärkter Wärmestrom vom Materialinneren (Fehlerbereich) zur Oberfläche hin einstellt, der dazu führt, dass sich direkt oberhalb der Fehlstelle ein deutlicher negativer Temperaturkontrast einstellt. In der Nachbarschaft dieses negativen Signals ergibt sich hingegen ein positiver Temperaturkontrast bedingt durch die verstärkte Wärmeerzeugung in der Umgebung der Fehlstelle in Folge einer erhöhten Wirbelstromdichte.

Für die Schichtdickenbestimmung einer Polymerbeschichtung oder keramischen Beschichtung 2 auf einem nicht ferromagnetischen Metallsubstrat 1, bspw. aus austenitischem Stahl, können bspw. die folgenden Parameter für die Durchführung des Verfahrens gewählt werden. Bei einer Dicke des Substratmaterials des metallischen Substrates 1 von 2 mm wird die Eindringtiefe des elektromagnetischen Impulses in etwa gleich der Dicke dieses Substratmaterials gewählt. Daraus ergibt sich eine Anregungsfrequenz von ca. 10 kHz. Diese Anregungsfrequenz ermöglicht eine homogene Aufheizung des metallischen Substrates, so dass sich die Schichtdicke mit hoher Genauigkeit bestimmen lässt.

Zum Nachweis eines Lunkers in einer ferromagnetischen Stahlplatte, bei der sich die Fehlstellen in einer Tiefenlage z von etwa 1,5 mm befinden, sollte die Eindringtiefe des elektromagnetischen Impulses etwa gleich der Tiefenlage der Fehlstellen gewählt werden. Hieraus ergibt sich eine Anregungsfrequenz von ca. 400 Hz, mit der Fehler in dieser Tiefe mit gutem Nachweisvermögen erfasst werden können.

Auch wenn in der vorliegenden Beschreibung und den vorliegenden Ausführungsbeispielen jeweils nur von einem elektromagnetischen Impuls die Rede ist, so lassen sich die Messungen selbstverständlich auch mit Impulsfolgen durchführen, wobei zwischen den einzelnen elektromagnetischen Impulsen jeweils die Temperaturverteilung an der Oberfläche einfach oder zeitaufgelöst gemessen wird. Auch eine Lock-In-Technik zur nochmaligen Verbesserung der Messgenauigkeit ist bei dem vorliegenden Verfahren selbstverständlich möglich.

Die Induktionsspule 6 ist bei den Messungen so zu gestalten, dass einerseits genügend Energie in das Material eingekoppelt wird und andererseits die Aufheizung möglichst homogen ist. Nach der impulsförmigen, induktiven Energieeinbringung wird das Prüfobjekt mit einem Scansystem genügend schnell in die Messposition verfahren, in der mittels des Infrarotkamerasystems 7 die Auswertung des instationären Wärmeleitungsvorganges erfolgt, der durch die induktive Aufheizung angeregt wurde. Mittels eines Kompensationsverfahrens unter Zuhilfenahme von Referenzproben können auch Inhomogenitäten, die durch die induktive Anregung bzw. die Geometrie des Prüfobjektes (charakteristisches Temperaturfeld) verursacht wurden, kompensiert werden, so dass die durch die Fehlstellen bedingten Temperaturfelder optimal erkannt werden können. Sind Fehlstellen nachzuweisen, bei denen die Responszeit, d. h. die Zeit vom Beginn der Anregung bis zum Auftreten des Fehlersignals, relativ kurz ist, kann es sinnvoll sein, ein besonders ausgestaltetes Spulensystem mit wenigen Windungen einzusetzen, bei dem es möglich ist, mit dem Infrarotkamerasystem zwischen den einzelnen Spulenwindungen hindurch auf die Prüfobjektoberfläche zu blicken. Von Prüfschritt zu Prüfschritt wird in solchen Fällen das Prüfobjekt oder das Spulensystem so bewegt, dass im ersten bzw. vorhergehenden Prüfschritt vom Spulensystem verdeckte Bereiche des Prüfobjektes in nachfolgenden Prüfschritten sichtbar sind. Durch entsprechend angepasste Spulen können relativ große Prüfobjekte in wenigen Prüfschritten flächendeckend untersucht werden.

Neben dieser Technik bietet die folgende dynamische Messtechnik bei einigen Anwendungen besondere Vorteile bei der Durchführung des vorliegenden Verfahrens. Die in der Figur 2 gezeigte Vorrichtung zur Durchführung dieser dynamischen Messtechnik, bei der das Prüfobjekt unterhalb des Spulensystems sowie der Infrarotkamera kontinuierlich vorbei bewegt wird - oder umgekehrt, umfasst in gleicher Weise einen Frequenzgenerator 8 sowie eine in diesem Fall als schmales lang gestrecktes Element ausgebildete Spule 6, eine Infrarotzeilenkamera 8 sowie optional eine Druckluftdüse 9 zur Beaufschlagung eines Bereiches des Prüfobjektes 3 mit einem Kühlluftstrom. Bei dieser Technik werden die Scangeschwindigkeit, die Zeitauflösung des Infrarotmesssystems sowie die Anordnung von Zeilenkamera und Spulensystem so gewählt, dass eine flächendeckende Prüfung des Prüfobjektes möglich ist. Das Prüfobjekt 3 wird dabei kontinuierlich relativ zur Spule 6 sowie der Infrarotkamera 7 bzw. 8 bewegt. Der Vorteil einer solchen Scantechnik ist grundsätzlich, dass zum einen eine homogenere laterale Aufheizung des Prüfobjektes mit einer damit verbundenen besseren Fehlererkennbarkeit bzw. genaueren Schichtdickenbestimmung möglich ist und zum anderen preiswertere Zeilenkamerasysteme für die Messung der Temperaturfelder eingesetzt werden können. Bei dieser Technik tritt auch keine Störung des Kamerabildfeldes durch die Aufheizspule 6 auf. Weiterhin wird durch diese Technik eine sehr schnelle Prüfung ermöglicht.

Bei der Anordnung der einzelnen Bestandteile der Vorrichtung sowie der Wahl der Scangeschwindigkeit ist zu berücksichtigen, dass Fehlstellen unterhalb der Prüfobjektoberfläche erst nach einer bestimmten Zeit nach Beginn der Aufheizung (Responszeit) den maximalen Temperaturkontrast ausbilden. Diese Zeit wird wesentlich bestimmt von den thermischen Materialparametern und der Tiefenlage der Fehlstellen unter der Oberfläche. Daher ist für einen optimalen Fehlernachweis ein bestimmter Abstand $\Delta x$ zwischen der Spule 6 (Spulenmitte) und dem Messsystem, der Infrarotzeilenkamera 8, einzuhalten, der von der Scangeschwindigkeit, den thermischen Materialparametern und der zu erwartenden Fehlertiefenlage der Fehlstellen abhängig ist. Der Abstand $\Delta x$, die Geschwindigkeit v und die Spulenlänge L in Scanrichtung sind so zu wählen, dass $\Delta x \approx v(z^2 / \alpha)$ (Gleichung 1). Die Aufheizdauer $\Delta t$ ergibt sich aus $\Delta t = L / v$. Für optimale Ergebnisse sollte $\Delta t$ so gewählt werden, dass $\Delta t \geq 0{,}5\ (z^2 / \alpha)$, wobei z der Tiefenlage der Fehlstelle unter der Oberfläche oder der abgeschätzten Dicke einer zu vermessenden Schicht, $\alpha = \lambda / \rho \times c$ der Diffusivität des Materials, $\lambda$ der Wärmeleitfähigkeit, $\rho$ der Dichte und c der spezifischen Wärmekapazität entsprechen. Somit ergibt sich für die Geschwindigkeit in diesem Falle $v = L / \Delta t$ und mit dem obigen Wert für $\Delta t$: $v \leq 2 \times L \times (\alpha / z^2)$. Bei typischen Werten,

wie bspw. von Stahl von $\alpha$ = 12 mm$^2$/s, L = 0,1 m und z = 2 mm ergibt sich hierbei für die Geschwindigkeit v ein Wert von v ≤ 0,6 m/s. Für den Abstand $\Delta$x ergibt sich: $\Delta$x ≈ 2 x L = 20 cm.

Werden bei der Messung andere Anforderungen, bspw. speziell hohe Prüfgeschwindigkeiten gefordert, so muss die Aufheizdauer $\Delta$t nicht unbedingt der obigen Ungleichung genügen. In diesem Falle ist es ausreichend, die folgenden beiden Gleichungen zu beachten. Der Abstand $\Delta$x zwischen der Spulenmitte und dem Mittelpunkt des Bildfeldes des Kamerasystems sollte so gewählt werden, dass $\Delta$x = v(z$^2$ / $\alpha$) und die Anregungsleistung P bei Annahme einer rechteckförmigen Flachspule: P x $\Delta$t / (L x B) ≥ 5 Ws/cm$^2$ sind, wobei B der Breite der Spule entspricht. Mit L = 10 cm und einer Breite der Spule von 5 cm sowie einer Scangeschwindigkeit von z.B. v = 2 m/s ($\Delta$t = 0,05 s) ergibt sich eine Anregungsleistung P ≥ 5000 W. Der Abstand $\Delta$x ergibt sich hier nach Gleichung 1 zu $\Delta$x ≈ 67 cm.

Figur 4 zeigt als Beispiel ein Thermografiebild eines Materialverbundes aus Polymerschichten auf einer Stahlplatte (Figur 4a) sowie zeitliche Temperaturverläufe auf den unterschiedlichen Beschichtungen (Figur 4b). Hierbei wurde ein Materialverbund mit einer Polymerschicht aus 8 unterschiedlichen Schichtdicken von 1,0 mm bis 2,1 mm auf einer Stahlplatte mit der vorliegenden induktiven Anregungstechnik untersucht. Anhand des Thermografiebildes ist die Temperaturverteilung auf der Oberfläche der Polymerbeschichtung zu einer bestimmten Zeit nach der Aufheizung farbcodiert erfassbar, wobei die einzelnen Farben in der vorliegenden Darstellung nur durch die mit den Linien angedeuteten Farbwechsel erkennbar sind. Man erkennt deutlich anhand der sich von links nach rechts stufenförmig verringernden Temperaturen die unterschiedlichen Schichtdicken, die sich von links nach rechts erhöhen. Das Diagramm zeigt den Temperaturverlauf für jede der 8 Schichtdicken in Abhängigkeit von der Zeit. Man stellt fest, dass sich die jeweilige Schicht um so schneller aufheizt und eine um so höhere Maximaltemperatur erreicht, je geringer die Schichtdicke ist. Die oberste Kurve stellt dabei die Schicht mit der geringsten Schichtdicke dar. Mit zunehmender Schichtdicke verringert sich der Temperaturanstieg deutlich. Aus diesen Messungen ist ersichtlich, dass sich aus der zeitaufgelösten Temperaturverteilung an der Oberfläche des Werkstückes bzw. aus der Temperatur zu einer bestimmten Zeit nach Beginn der Anregung klare Rückschlüsse auf die Schichtdicken der Polymerschichten ziehen lassen.

Das vorliegende Verfahren sowie die zugehörige Vorrichtung ermöglichen den Einsatz von Induktionsanlagen mit niedrigeren Frequenzen, die sich grundsätzlich einfacher und damit kostengünstiger technisch realisieren lassen als solche mit höheren Frequenzen. Bei niedrigeren Frequenzen können zudem mit weniger Aufwand hohe Leistungen realisiert werden. Auch auf eine Wasserkühlung der Induktoren kann bei diesen Frequenzen in der Regel verzichtet werden, was die Anlage ebenfalls vereinfacht. Niedrigere Frequenzen bedeuten auch ein geringeres gesundheitliches Risiko beim Umgang mit den Induktionsanlagen. Das Verfahren ermöglicht die verbesserte Charakterisierung von Delaminationen, Lunkern, schräg liegenden Rissen und Fremdmaterialeinschlüssen in metallischen Materialien oder von Fehlstellen, wie bspw. Delaminationen, in Materialverbunden aus Metallen und Nichtmetallen. Desweiteren erlaubt das Verfahren die Wandstärkebestimmung metallischer Komponenten oder die Charakterisierung von Schichtdicken mit einer größeren Genauigkeit als mit herkömmlichen thermischen Techniken. Das Verfahren arbeitet vollständig berührungslos und ist so schnell, dass auch eine 100%-Prüfung in der industriellen Qualitätssicherung oder eine wiederkehrende Prüfung sicherheitsrelevanter Bauteile ermöglicht wird. Neben der Prüfung metallischer Materialien hinsichtlich unter der Oberfläche liegender voluminöser oder flächiger Fehlstellen ermöglicht das Verfahren auch den Nachweis sowie die Charakterisierung von Fehlstellen in nicht elektrisch leitfähigen Beschichtungen auf leitfähigen Substraten sowie die quantitative Bestimmung von Schichtdicken nichtmetallischer Beschichtungen auf metallischen Substraten mit hoher Genauigkeit.

Bezugszeichenliste

| 1 | elektrisch leitfähiges Substrat |
|---|---|
| 2 | nicht elektrisch leitfähige Beschichtung |
| 3 | Werkstück bzw. Prüfobjekt |
| 4 | Fehlstellen |
| 5 | elektrisch leitfähiger Bereich |
| 6 | Induktionsspule |
| 7 | Infrarotkamera |
| 8 | Infrarotzeilenkamera |
| 9 | Druckluftdüse |
| 10 | Druckluftstrahl |

**Patentansprüche**

1. Verfahren zur Charakterisierung von Werkstücken (3) aus einem elektrisch leitfähigen Material oder aus einem Materialverbund mit einer Schicht oder einem Substrat (1) aus dem elektrisch leitfähigen Material, bei dem ein elektrisch leitfähiger Bereich (5) des Werkstücks (3) durch flächige Einkopplung eines elektromagnetischen Impulses induktiv erwärmt und eine aus der induktiven Erwärmung resultierende örtliche Temperaturverteilung an einer Oberfläche des Werkstücks (3) während der Einkopplung und/oder in zeitlichem Abstand zum Beginn der Einkopplung des elektromagnetischen Impulses erfasst wird,
wobei
die induktive Erwärmung mit einer Anregungsfrequenz f von $\leq 20$ kHz erfolgt, die so gewählt ist, dass eine Eindringtiefe des elektromagnetischen Impulses in den elektrisch leitfähigen Bereich (5) größer oder gleich einer Tiefe von zu erfassenden verdeckten Fehlstellen (4) im elektrisch leitfähigen Bereich (5) und/oder größer oder gleich einer Dicke der Schicht bzw. des Substrates (1) aus dem elektrisch leitfähigen Material ist,
die Temperaturverteilung zeitaufgelöst erfasst wird, und
zu einer Zeit $t_a \approx z^2 / \alpha$ nach Beginn der induktiven Erwärmung, die Temperaturverteilung an der Oberfläche des elektrisch leitfähigen Materials zum Nachweis von Fehlstellen (4) im Werkstück erfasst wird, wobei z der Tiefe der zu erfassenden Fehlstellen (4) und $\alpha$ der Wärme-Diffusivität des leitfähigen Materials entsprechen, oder
zur Detektion von Fehlstellen (4) in einer elektrisch nicht leitfähigen Schicht (2) auf dem Substrat (1) aus dem elektrisch leitfähigen Material oder von Fehlstellen (4) im elektrisch leitfähigen Substrat (1) die örtliche Temperaturverteilung an der Oberfläche der elektrisch nicht leitfähigen Schicht (2) zu einer Zeit $t_m \approx (D^2 / \alpha)$ nach Beginn der induktiven Erwärmung ausgewertet wird, wobei D der Dicke der elektrisch nicht leitfähigen Schicht (2) und $\alpha$ der Wärme-Diffusivität der elektrisch nicht leitfähigen Schicht (2) entsprechen.

2. Verfahren zur Charakterisierung von Werkstücken (3) aus einem elektrisch leitfähigen Material oder aus einem Materialverbund mit einer Schicht oder einem Substrat (1) aus dem elektrisch leitfähigen Material, bei dem ein elektrisch leitfähiger Bereich (5) des Werkstücks (3) durch flächige Einkopplung eines elektromagnetischen Impulses induktiv erwärmt und eine aus der induktiven Erwärmung resultierende örtliche Temperaturverteilung an einer Oberfläche des Werkstücks (3) während der Einkopplung und/oder in zeitlichem Abstand zum Beginn der Einkopplung des elektromagnetischen Impulses erfasst wird,
wobei
die induktive Erwärmung mit einer Anregungsfrequenz f von $\leq 20$ kHz erfolgt, die so gewählt ist, dass eine Eindringtiefe des elektromagnetischen Impulses in den elektrisch leitfähigen Bereich (5) größer oder gleich einer Tiefe von zu erfassenden verdeckten Fehlstellen (4) im elektrisch leitfähigen Bereich (5) und/oder größer oder gleich einer Dicke der Schicht bzw. des Substrates (1) aus dem elektrisch leitfähigen Material ist,
die Temperaturverteilung zeitaufgelöst erfasst wird,
aus charakteristischen Messgrößen eines zeitlichen Temperaturverlaufs an der Oberfläche eine Dicke einer auf der Schicht oder dem Substrat (1) aus dem elektrisch leitfähigen Material aufgebrachten elektrisch nicht leitfähigen Schicht (2) des Materialverbundes bestimmt wird, und
zur Bestimmung der Dicke der elektrisch nicht leitfähigen Schicht (2) auf dem Substrat (1) aus dem elektrisch leitfähigen Material die Temperatur an der Oberfläche der elektrisch nicht leitfähigen Schicht (2) zu einer Zeit $t_m \approx (D^2 / \alpha)$ nach Beginn der induktiven Erwärmung ausgewertet wird, wobei D der zu erwartenden Schichtdicke und $\alpha$ der Wärme-Diffusivität des Materials entsprechen.

3. Verfahren zur Charakterisierung von Werkstücken (3) aus einem elektrisch leitfähigen Material oder aus einem Materialverbund mit einer Schicht oder einem Substrat (1) aus dem elektrisch leitfähigen Material, bei dem ein elektrisch leitfähiger Bereich (5) des Werkstücks (3) durch flächige Einkopplung eines elektromagnetischen Impulses induktiv erwärmt und eine aus der induktiven Erwärmung resultierende örtliche Temperaturverteilung an einer Oberfläche des Werkstücks (3) während der Einkopplung und/oder in zeitlichem Abstand zum Beginn der Einkopplung des elektromagnetischen Impulses erfasst wird,
wobei
die induktive Erwärmung mit einer Anregungsfrequenz f von $\leq 20$ kHz erfolgt, die so gewählt ist, dass eine Eindringtiefe des elektromagnetischen Impulses in den elektrisch leitfähigen Bereich (5) größer oder gleich einer Tiefe von zu erfassenden verdeckten Fehlstellen (4) im elektrisch leitfähigen Bereich (5) und/oder größer oder gleich einer Dicke der Schicht bzw. des Substrates (1) aus dem elektrisch leitfähigen Material ist,
die Temperaturverteilung zeitaufgelöst erfasst wird, und
aus der Temperatur zu einer bestimmten Zeit $t > \approx W^2/\alpha$ nach Beginn der Einkopplung des elektromagnetischen Impulses eine Wandstärke des elektrisch leitfähigen Materials bestimmt wird, wobei W einer geschätzten Wandstärke und $\alpha$ der Wärme-Diffusivität des Materials entsprechen.

**4.** Verfahren nach einem der Ansprüche 1 bis 3, **dadurch gekennzeichnet,**
**dass** die induktive Erwärmung mit einer Anregungsfrequenz f von ≤ 10 kHz erfolgt.

**5.** Verfahren nach einem der Ansprüche 1 bis 4, **dadurch gekennzeichnet,**
**dass** die Einkopplung des elektromagnetischen Impulses und die Erfassung der Temperaturverteilung während einer kontinuierlichen Relativbewegung zwischen dem Werkstück (3) und einer Einrichtung (6) zur Einkopplung des elektromagnetischen Impulses erfolgt.

**6.** Verfahren nach Anspruch 5,
**dadurch gekennzeichnet,**
**dass** für die Erfassung der Temperaturverteilung eine Zeilenkamera (8) eingesetzt wird.

**7.** Verfahren nach Anspruch 6,
**dadurch gekennzeichnet,**
**dass** zum Nachweis von Fehlstellen (4) in dem elektrisch leitfähigen Material ein Abstand Δx zwischen der Zeilenkamera (8) und der Mitte einer für die Einkopplung der elektromagnetischen Impulse eingesetzten Spule (6) wie folgt gewählt wird: $\Delta x \approx v \, (z^2 / \alpha)$, wobei z der Tiefe der zu erfassenden Fehlstellen, $\alpha$ der Wärme-Diffusivität des Materials und v der Geschwindigkeit der Relativbewegung entspricht.

**8.** Verfahren nach einem der Ansprüche 1 bis 6,
**dadurch gekennzeichnet,**
**dass** zum Nachweis von Fehlstellen (4) nahe an der Oberfläche des elektrisch leitfähigen Materials oder zur Charakterisierung einer dünnen, elektrisch nicht leitfähigen Schicht auf dem elektrisch leitfähigen Material die Erfassung der Temperaturverteilung während der induktiven Erwärmung erfolgt.

**9.** Verfahren nach einem der Ansprüche 1 bis 6,
**dadurch gekennzeichnet,**
**dass** bei ebenen Werkstücken (3) mit Dicken <= 3 mm die Einkopplung des elektromagnetischen Impulses und die Erfassung der Temperaturverteilung von unterschiedlichen Seiten des Werkstückes (3) erfolgen.

**10.** Verfahren nach einem der Ansprüche 1 bis 6 oder 9,
**dadurch gekennzeichnet,**
**dass** bei Werkstücken (3) aus einem Materialverbund aus einem Substrat (1) aus dem elektrisch leitfähigen Material und einer Schicht (2) aus einem elektrisch nicht leitfähigen Material die Erfassung der Temperaturverteilung in einem Wellenlängenbereich erfolgt, bei dem das elektrisch nicht leitfähige Material Infrarotstrahlung stark absorbiert.

**11.** Verfahren nach einem der Ansprüche 1 bis 10,
**dadurch gekennzeichnet,**
**dass** bei Werkstücken aus einem elektrisch leitfähigen Material über eine vorgebbare Länge des elektromagnetischen Impulses eine Aufheizdauer $\Delta t \geq 0,5 * (z^2 / \alpha)$ gewählt wird, wobei z der Tiefe der zu erfassenden Fehlstellen (4) und $\alpha$ einer Diffusivität des elektrisch leitfähigen
Materials entspricht.

**12.** Verfahren nach einem der Ansprüche 1 bis 11,
**dadurch gekennzeichnet,**
**dass** die Oberfläche des Werkstücks (3) zumindest zwischen der Einkopplung des elektromagnetischen Impulses und der Erfassung der Temperaturverteilung durch Anblasen mit einem kontinuierlichen oder gepulsten Gasstrom (10) gekühlt wird.

**13.** Verfahren nach einem der Ansprüche 1, 3 bis 12,
**dadurch gekennzeichnet,**
**dass** aus charakteristischen Messgrößen eines zeitlichen Temperaturverlaufs an der Oberfläche eine Dicke einer auf der Schicht oder dem Substrat (1) aus dem elektrisch leitfähigen Material aufgebrachten elektrisch nicht leitfähigen Schicht (2) des Materialverbundes bestimmt wird.

**14.** Verfahren nach einem der Ansprüche 1 bis 12,
**dadurch gekennzeichnet,**
**dass** aus charakteristischen Messgrößen eines zeitlichen Temperaturverlaufs an der Oberfläche unterschiedliche Tiefen von Fehlstellen (4) in dem elektrisch leitfähigen Material bestimmt werden.

15. Verfahren nach einem der Ansprüche 1 bis 14,
**dadurch gekennzeichnet,**
**dass** zur Kompensation von Inhomogenitäten der Temperaturverteilung, die durch Geometrieeinflüsse des Werkstückes (3) bedingt sein können, eine Referenzmessung an einem Referenzprüfobjekt derselben Geometrie mit denselben Messparametern durchgeführt wird wie die Messung am Werkstück (3), wobei aus der Referenzmessung Referenzmessdaten erhalten werden, die für jeden Messzeitpunkt von Messdaten, die am Werkstück erhalten wurden, subtrahiert und mit einem konstanten Offset-Wert addiert werden.

16. Verfahren nach einem der Ansprüche 1 bis 15,
**dadurch gekennzeichnet,**
**dass** die Erfassung der Temperaturverteilung mittels Infrarot-Strahlungsmesstechnik erfolgt.

17. Verfahren nach einem der Ansprüche 1 bis 16,
**dadurch gekennzeichnet,**
**dass** der elektrisch leitfähige Bereich mit elektromagnetischen Impulsen beaufschlagt wird, deren magnetische Feldlinien zu erfassende Fehlstellen (4) unter unterschiedlichen Winkeln durchdringen.

18. Verfahren nach Anspruch 17,
**dadurch gekennzeichnet,**
**dass** der elektrisch leitfähige Bereich mit elektromagnetischen Impulsen beaufschlagt wird, deren magnetische Feldlinien bei rissartigen Fehlstellen so orientiert sind, dass sie annähernd parallel zu den Rissen verlaufen.

## Claims

1. A method for characterising workpieces (3) consisting of an electrically conductive material or a composite material comprising a layer or a substrate (1) made of the electrically conductive material, in which an electrically conductive region (5) of the workpiece (3) is inductively heated by means of a planar coupling of an electromagnetic impulse and a local temperature distribution over a surface of the workpiece (3), which results from the inductive heating process, is detected during the coupling operation and/or at a temporal interval at the start of the coupling of the electromagnetic impulse,
the inductive heating process being carried out at an excitation frequency f of $\leq 20$ kHz, which is selected in such a way that the penetration depth of the electromagnetic impulse in the electrically conductive region (5) is greater than or equal to the depth of concealed defective points (4) which are to be detected in the electrically conductive region (5) and/or is greater than or equal to a thickness of the layer and/or the substrate (1) made of the electrically conductive material,
the temperature distribution being detected in a time-resolved manner, and
at a time $t_a \approx z^2 / \alpha$ after the start of the inductive heating, the temperature distribution on the surface of the electrically conductive material being detected for evidence of defective points (4) in the workpiece, z corresponding to the depth of the defective points (4) to be detected and $\alpha$ to the thermal diffusivity of the conductive material, or
for detecting defective points (4) in a non-electrically conductive layer (2) on the substrate (1) made of the electrically conductive material or defective points (4) in the electrically conductive substrate (1), the local temperature distribution on the surface of the non-electrically conductive layer (2) being evaluated at a time $t_m \approx (D^2 / \alpha)$ after the start of the inductive heating, D corresponding to the thickness of the non-electrically conductive layer (2) and $\alpha$ to the thermal diffusivity of the non-electrically conductive layer (2).

2. The method for characterising workpieces (3) consisting of an electrically conductive material or a composite material comprising a layer or a substrate (1) made of the electrically conductive material, in which an electrically conductive region (5) of the workpiece (3) is inductively heated by means of a planar coupling of an electromagnetic impulse and a local temperature distribution over a surface of the workpiece (3), which results from the inductive heating process, is detected during the coupling operation and/or at a temporal interval at the start of the coupling of the electromagnetic impulse,
the inductive heating process being carried out at an excitation frequency f of $\leq 20$ kHz, which is selected in such a way that the penetration depth of the electromagnetic impulse in the electrically conductive region (5) is greater than or equal to the depth of concealed defective points (4) which are to be detected in the electrically conductive region (5) and/or is greater than or equal to a thickness of the layer and/or the substrate (1) made of the electrically conductive material,

the temperature distribution being detected in a time-resolved manner,

a thickness of an non-electrically conductive layer (2) of the composite material applied to the layer or the substrate (1) made of the electrically conductive material being determined from characteristic measured values of a time-dependent temperature curve on the surface and for determining the thickness of the non-electrically conductive layer on the substrate (1) made of the electrically conductive material, the temperature on the surface of the non-electrically conductive layer (2) being evaluated at a time $t_m \approx (D^2 / \alpha)$ after the start of the inductive heating process, D corresponding to the layer thickness to be expected and $\alpha$ to the thermal diffusivity of the material.

3. The method for characterising workpieces (3) consisting of an electrically conductive material or a composite material comprising a layer or a substrate (1) made of the electrically conductive material, in which an electrically conductive region (5) of the workpiece (3) is inductively heated by means of a planar coupling of an electromagnetic impulse and a local temperature distribution over a surface of the workpiece (3), which results from the inductive heating process, is detected during the coupling operation and/or at a temporal interval at the start of the coupling of the electromagnetic impulse,

the inductive heating process being carried out at an excitation frequency of f of $\leq$ 20 kHz, which is selected in such a way that the penetration depth of the electromagnetic impulse in the electrically conductive region (5) is greater than or equal to the depth of concealed defective points (4) which are to be detected in the electrically conductive region (5) and/or is greater than or equal to a thickness of the layer and/or the substrate (1) made of the electrically conductive material,

the temperature distribution being detected in a time-resolved manner, and

a wall thickness of the electrically conductive material being determined from the temperature at a specific time $t > \approx W^2 / \alpha$ after the start of the coupling of the electromagnetic impulse, W corresponding to an estimated wall thickness and $\alpha$ to the thermal diffusivity of the material.

4. The method according to one of Claims 1 to 3, **characterised in that** the inductive heating process is carried out at an excitation frequency f of $\leq$ 10 kHz.

5. The method according to one of Claims 1 to 4, **characterised in that** the coupling of the electromagnetic impulse and the detection of the temperature distribution take place during a continuous relative movement between the workpiece (3) and a device (6) for coupling the electromagnetic impulse.

6. The method according to Claim 5, **characterised in that** a line scan camera (8) is used for detecting the temperature distribution.

7. The method according to Claim 6, **characterised in that** for evidence of defective points (4) in the electrically conductive material, a spacing $\Delta x$ between the line scan camera (8) and the middle of a coil (6) used for coupling the electromagnetic impulse is selected as follows: $\Delta x \approx v \, (z^2 / \alpha)$, z corresponding to the depth of the defective points to be detected, $\alpha$ to the thermal diffusivity of the material and v to the speed of the relative movement.

8. The method according to one of Claims 1 to 6, **characterised in that** for evidence of defective points (4) in the vicinity of the surface of the electrically conductive material or for characterising a thin, non-electrically conductive layer on the electrically conductive material, the detection of the temperature distribution takes place during the inductive heating process.

9. The method according to one of Claims 1 to 6, **characterised in that** with planar workpieces (3) of thicknesses <= 3 mm, the coupling of the electromagnetic impulse and the detection of the temperature distribution take place from different sides of the workpiece (3).

10. The method according to one of Claims 1 to 6 or 9, **characterised in that** in workpieces (3) made of a composite material consisting of a substrate (1) made of the electrically conductive material and a layer (2) made of a non-electrically conductive material, the detection of the temperature distribution takes place in a wavelength range in which the non-electrically conductive material greatly absorbs infrared radiation.

11. The method according to one of Claims 1 to 10, **characterised in that** in workpieces made of an electrically conductive material, over a predeterminable length of the electromagnetic impulse a heating period $\Delta t \geq 0.5 * (z^2 / \alpha)$ is selected, z corresponding to the depth of the defective points (4) to be detected and $\alpha$ corresponding to a diffusivity of the electrically conductive material.

**12.** The method according to one of Claims 1 to 11, **characterised in that**, at least between the coupling of the electromagnetic impulse and the detection of the temperature distribution, the surface of the workpiece (3) is cooled by blowing with a continuous or pulsed gas flow (10).

**13.** The method according to one of Claims 1, 3 to 12, **characterised in that** a thickness of a non-electrically conductive layer (2) of the composite material applied to the layer or the substrate (1) made of the electrically conductive material is determined from characteristic measured values of a time-dependent temperature curve on the surface.

**14.** The method according to one of Claims 1 to 12, **characterised in that** different depths of defective points (4) in the electrically conductive material are determined from characteristic measured values of a time-dependent temperature curve on the surface.

**15.** The method according to one of Claims 1 to 14, **characterised in that** for compensating for inhomogeneities in the temperature distribution, which may be caused by the effects of the geometry of the workpiece (3), a reference measurement is carried out on a reference test object of the same geometry using the same measurement parameters as for the measurement on the workpiece (3), reference measured data being obtained from the reference measurement, which for each measuring period are subtracted from measured data which have been obtained on the workpiece and added to a constant offset value.

**16.** The method according to one of Claims 1 to 15, **characterized in that** the detection of the temperature distribution takes place by means of infrared radiation measurement techniques.

**17.** The method according to one of Claims 1 to 16, **characterised in that** the electrically conductive region is subjected to electromagnetic impulses, the magnetic field lines thereof penetrating at different angles the defective points (4) to be detected.

**18.** The method according to Claim 17, **characterised in that** the electrically conductive region is subjected to electromagnetic impulses, in the event of crack-type defective points the magnetic field lines of said electromagnetic impulses being oriented so that they extend approximately parallel to the cracks.

**Revendications**

**1.** Procédé de caractérisation de pièces (3) constituées d'un matériau électriquement conducteur ou d'un alliage de matériaux avec une couche ou un substrat (1) constitué du matériau électriquement conducteur, dans lequel une zone (5) électriquement conductrice de la pièce (3) est chauffée inductivement par couplage de surface d'une impulsion électromagnétique et une distribution de température locale résultant du chauffage inductif sur une surface de la pièce (3) pendant le couplage et/ou à intervalle temporel par rapport au début du couplage de l'impulsion électromagnétique est détectée,
dans lequel
le chauffage inductif a lieu à une fréquence d'excitation f de $\leq 20$ kHz, qui est choisie de telle sorte qu'une profondeur de pénétration de l'impulsion électromagnétique dans la zone (5) électriquement conductrice soit plus grande ou identique à une profondeur des manques (4) couverts à détecter dans la zone électriquement conductrice (5) et/ou plus grande ou identique à une épaisseur de la couche, resp. du substrat (1) constitué du matériau électriquement conducteur,
la distribution de température est détectée avec une résolution temporelle, et
à un temps ta $\approx z^2/\alpha$ après le début du chauffage inductif, la distribution de température sur la surface du matériau électriquement conducteur est détectée dans la pièce comme preuves des manques (4), dans lequel z correspond à la profondeur du manque (4) à détecter et $\alpha$ à la faculté de diffusion de chaleur du matériau conducteur, ou
afin de détecter les manques (4) dans une couche (2) électriquement non conductrice sur le substrat (1) constitué du matériau électriquement conducteur ou les manques (4) dans le substrat (1) électriquement conducteur la distribution de température locale sur la surface de la couche (2) électriquement non conductrice est évaluée à un temps tm $\approx (D^2/\alpha)$ après le début du chauffage inductif, dans lequel D correspond à l'épaisseur de la couche électriquement non conductrice (2) et $\alpha$ correspond à la faculté de diffusion de chaleur de la couche électriquement non conductrice (2).

**2.** Procédé de caractérisation de pièces (3) constituées d'un matériau électriquement conducteur ou d'un alliage de matériaux avec une couche ou un substrat (1) constitué du matériau électriquement conducteur, dans lequel une zone (5) électriquement conductrice de la pièce (3) est chauffée inductivement par couplage de surface d'une impulsion électromagnétique et une distribution de température locale résultant du chauffage inductif sur une surface de la pièce (3) pendant le couplage et/ou à intervalle de temps par rapport au début du couplage de l'impulsion électromagnétique est détectée,

dans lequel

le chauffage inductif a lieu à une fréquence d'excitation f de $\leq 20$ kHz, qui est choisie de telle sorte qu'une profondeur de pénétration de l'impulsion électromagnétique dans la zone (5) électriquement conductrice soit plus grande ou identique à une profondeur des manques (4) couverts à détecter dans la zone électriquement conductrice (5) et/ou plus grande ou identique à une épaisseur de la couche, resp. du substrat (1) constitué du matériau électriquement conducteur,

la distribution de température est détectée avec une résolution temporelle,

à partir des grandeurs de mesure caractéristiques d'une courbe de température temporelle sur la surface une épaisseur d'une couche électriquement non conductrice (2) appliquée sur la couche ou le substrat (1) constitué d'un matériau électriquement conducteur est déterminée, et afin de déterminer l'épaisseur de la couche électriquement non conductrice (2) sur le substrat (1) constitué du matériau électriquement conducteur la température sur la surface de la couche électriquement non conductrice (2) est évaluée à un temps tm $\approx (D^2/\alpha)$ après le début du chauffage inductif, dans lequel D correspond à l'épaisseur de couche à escompter et $\alpha$ à la faculté de diffusion de chaleur du matériau.

3.  Procédé de caractérisation de pièces (3) constituées d'un matériau électriquement conducteur ou d'un alliage de matériaux avec une couche ou un substrat (1) constitué du matériau électriquement conducteur, dans lequel une zone électriquement conductrice (5) de la pièce est chauffée inductivement par couplage de surface d'une impulsion électromagnétique et une distribution de température locale résultant du chauffage inductif sur une surface de la pièce (3) pendant le couplage et/ou à intervalle de temps par rapport au début du couplage de l'impulsion électromagnétique est détectée,

dans lequel

le chauffage inductif a lieu à une fréquence d'excitation f de $\leq 20$ kHz, qui est choisie de telle sorte qu'une profondeur de pénétration de l'impulsion électromagnétique dans la zone (5) électriquement conductrice soit plus grande ou identique à une profondeur des manques (4) couverts à détecter dans la zone électriquement conductrice (5) et/ou plus grande ou identique à une épaisseur de la couche, resp. du substrat (1) constitué du matériau électriquement conducteur,

la distribution de température est détectée avec une résolution temporelle,

d'après la température à un temps déterminé t $> \approx W^2/\alpha$ après le début du couplage de l'impulsion électromagnétique une épaisseur de paroi du matériau électriquement conducteur est déterminée, dans lequel W correspond à une épaisseur de paroi estimée et $\alpha$ correspond à la faculté de diffusion de chaleur du matériau.

4.  Procédé selon une des revendications 1 à 3,
    **caractérisé en ce que**
    le chauffage inductif a lieu à une fréquence d'excitation f de $\leq 10$ kHz.

5.  Procédé selon une des revendications 1 à 4,
    **caractérisé en ce que**
    le couplage de l'impulsion électromagnétique et la détection de la distribution de température a lieu pendant un mouvement relatif continu entre la pièce (3) et un dispositif (6) de couplage de l'impulsion électromagnétique.

6.  Procédé selon la revendication 5,
    **caractérisé en ce que**
    pour la détection de la distribution de température, une caméra linéaire (8) est employée.

7.  Procédé selon la revendication 6,
    **caractérisé en ce que**
    pour établir des manques (4) dans le matériau électriquement conducteur un espacement $\Delta x$ entre la caméra linéaire (8) et le centre d'une bobine (6) employée pour le couplage de l'impulsion électromagnétique est choisi comme suit : $\Delta x \approx v(z^2/\alpha)$, dans lequel z correspond à la profondeur des manques à détecter, $\alpha$ à la faculté de diffusion de chaleur du matériau et v à la vitesse du mouvement relatif.

8.  Procédé selon une des revendications 1 à 6,
    **caractérisé en ce que**

pour établir des manques (4) à proximité de la surface du matériau électriquement conducteur ou pour caractériser une couche mince, électriquement non conductrice sur le matériau électriquement conducteur la détection de la distribution de température a lieu pendant le chauffage inductif.

9. Procédé selon une des revendications 1 à 6,
**caractérisé en ce que**
dans le cas de pièces plates (3) avec une épaisseur <= 3 mm le couplage de l'impulsion électromagnétique et la détection de la distribution de température ont lieu à partir des différents côtés de la pièce (3).

10. Procédé selon une des revendications 1 à 6 ou 9,
**caractérisé en ce que**
dans le cas de pièces (3) constituée d'un alliage de matériaux d'un substrat (1) constitué du matériau électriquement conducteur et d'une couche (3) constituée d'un matériau électriquement non conducteur la détection de la distribution de température a lieu dans une plage de longueur d'onde, dans laquelle le matériau électriquement non conducteur absorbe fortement le rayonnement infrarouge.

11. Procédé selon une des revendications 1 à 10,
**caractérisé en ce que**
dans le cas de pièces constituées d'un matériau électriquement conducteur sur une longueur prescrite de l'impulsion électromagnétique une durée de chauffage $\Delta t \geq 0,5 *(z^2/\alpha)$ est choisie, dans lequel z correspond à la profondeur des manques (4) à détecter et $\alpha$ correspond à une faculté de diffusion du matériau électriquement conducteur.

12. Procédé selon une des revendications 1 à 11,
**caractérisé en ce que**
la surface de la pièce (3) est refroidie au moins entre le couplage de l'impulsion électromagnétique et la détection de la distribution de température par soufflage avec un courant de gaz (10) pulsé ou continu.

13. Procédé selon une des revendications 1,3 à 12,
**caractérisé en ce que**
d'après les grandeurs de mesure caractéristiques d'une courbe de température temporelle sur la surface une épaisseur d'une couche électriquement non conductrice (2) de l'alliage de matériaux appliquée sur la couche ou le substrat (1) constitué d'un matériau électriquement conducteur est déterminée.

14. Procédé selon une des revendications 1 à 12,
**caractérisé en ce que**
d'après les grandeurs de mesure caractéristiques d'une courbe de température temporelle sur la surface des profondeurs différentes des manques (4) dans le matériau électriquement conducteur sont déterminées.

15. Procédé selon une des revendications 1 à 14,
**caractérisé en ce que**
pour compenser les inhomogénéités de la distribution de température, qui peuvent être induites par les influences géométriques de la pièce (3), une mesure de référence sur un objet d'essai de référence de la géométrie de ce dernier avec les paramètres de mesure de ce dernier est effectuée comme la mesure sur la pièce (3), dans lequel d'après la mesure de référence des données de mesure de référence sont obtenues, qui sont soustraites pour chaque moment de mesure des données de mesure, qui ont été obtenues sur la pièce, et qui sont additionnées à une valeur de décalage constante.

16. Procédé selon une des revendications 1 à 15,
**caractérisé en ce que**
la détection de la distribution de température a lieu au moyen d'une technique de mesure de rayonnement infrarouge.

17. Procédé selon une des revendications 1 à 16,
**caractérisé en ce que**
la zone électriquement conductrice est sollicitée avec des impulsions électromagnétiques, dont les lignes de champ magnétiques traversent les manques (4) à détecter à des angles différents.

18. Procédé selon la revendication 17,
**caractérisé en ce que**

la zone électriquement conductrice est sollicitée avec des impulsions électromagnétiques, dont les lignes de champ magnétiques sont orientées en présence de manques du type fissures, de sorte qu'elles s'étendent approximativement parallèlement aux fissures.

Fig. 1

Fig. 2

Fig. 3a

Fig. 3b

Fig. 4a

Fig. 4b

**EP 1 642 116 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19933446 C1
- US 5562345 A